# EUROPEAN PATENT SPECIFICATION

(11) **EP 3 244 768 B1**
(45) Date of publication and mention of the grant of the patent: **27.02.2019**
(21) Application number: 16707250.3
(22) Date of filing: 15.01.2016
(51) Int. Cl.: A43D 3/02, A43D 1/00, B29C 61/06, A43D 3/04

(54) **SHAPE MEMORY POLYMER FOOTWEAR LAST**
SCHUHWERKLEISTEN AUS FORMGEDÄCHTNISPOLYMER
FORME D'ARTICLE CHAUSSANT EN POLYMÈRE À MÉMOIRE DE FORME

(30) Priority: 16.01.2015 US 201562104620 P
(43) Date of publication of application: 22.11.2017
(73) Proprietor: Nike Innovate C.V., Beaverton, OR 97005-6453 (US)
(72) Inventor: KALLAYIL, Ravishkar N., Beaverton, Oregon 97005-6453 (US)
(74) Representative: Müller-Boré & Partner Patentanwälte PartG mbB
(86) International application number: PCT/US2016/013594
(87) International publication number: WO 2016/115461

(56) References cited:
- WO-A1-02/083767
- WO-A2-2014/160506
- US-A1- 2013 291 399

## Description

### FIELD OF THE INVENTION

The present invention is related to a dynamic footwear last. The dynamic footwear last has the ability of being formed and reformed into a plurality of sizes and shapes depending on the present need of the dynamic footwear last in a footwear manufacturing process.

### BACKGROUND OF THE INVENTION

Footwear lasts are essential in the manufacturing of footwear. Footwear lasts come in many different shapes and sizes tailored to approximate a human foot and the particular footwear being made. Typical footwear lasts are made from hardwoods, cast iron or high-density polyethylene, the latter being preferable in factory type settings where mass production of articles of footwear take place. These high density polyethylene footwear lasts are preferred in factory type settings due to their cost efficiency and ability to be recycled when worn out. However, the disadvantage of these types of footwear lasts is that a large inventory of footwear lasts of different shapes and sizes is needed for the construction of footwear of different shapes and sizes, or even the same type of footwear in different sizes. Therefore, a particular footwear manufacturing facility may be limited to the manufacture of footwear that can be manufactured on the particular footwear lasts that is able to store in its inventory.

WO 2014/160506 A2 describes three-dimensional articles comprising flexible composite materials and methods of manufacturing said three-dimensional articles, and more particularly, to methods for manufacturing seamless three dimensional-shaped articles usable for such finished products as airbags/inflatable structures, bags, shoes, and similar three-dimensional products.

US 2013/291399 A1 describes A shoe insole comprising a spacer fabric comprising a bottom layer, a top layer, and a plurality of interconnecting filaments extending between said bottom layer and said top layer, wherein at least one of said bottom layer, said top layer and said plurality of interconnecting filaments comprise a shape memory material.

WO 02/083767 A1 describes a shape memory polymer structure having lattice frames, in which polymers having shape memory properties are used as structural materials and thus original shape and altered shape of the structure can be appropriately used, and in the inside of the structure is formed lattice frames, thereby resistance to compression being enhanced and shape of the structure being easily altered, thereby being used as various industrial materials. The shape memory polymer structure is integratedly formed with a four side-closed quadrangular outer wall and lattice frame-comprising partitions therein.

### SUMMARY OF THE INVENTION

The invention relates to a shape memory polymer footwear last system as specified in claim 1, to a method for forming a footwear last as specified in claim 9 and to a method for using a single shape memory polymer footwear last as specified in claim 13. Preferred embodiments are specified in the dependent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The present invention is defined by the claims.

An average footwear manufacturing facility must carry a vast number of footwear lasts to account for different footwear styles and sizes, in addition to multiples of each particular footwear last for replacement of worn out or damaged footwear lasts. The vast number of footwear lasts may take up a significant amount or real estate for storage. For example, a manufacturing facility carrying 60,000 or more lasts would require about 55,000 sq. ft. dedicated for footwear last storage, which is roughly the size of a soccer field.

Additionally, due to the vast number of footwear lasts corresponding to different footwear types and sizes, the storage and inventory process these footwear lasts tends to be very complex and limiting in regards to the number of different types of footwear that a particular footwear manufacturing facility can manufacture and the sizes of footwear that the particular footwear manufacturing facility can manufacture. In other words, each manufacturing facility is limited to the manufacturing of a select set of products requiring the types of lasts and tooling equipment they are able to house in the particular manufacturing facility.

To overcome these setbacks, a dynamic footwear last may be constructed from a shape memory material, such as a shape memory polymer (SMP). A single dynamic footwear last may be repeatedly adapted to conform to any size and shape of footwear last with very good accuracy and reliability, thereby dramatically reducing the total number of lasts required at a particular footwear manufacturing facility. Therefore reducing the amount of real estate needed for footwear last storage at the particular manufacturing facility, thereby greatly reducing operational and maintenance costs. Further, the dynamic footwear last in accordance with aspects herein could give the manufacturing facility greater flexibility as to the types of footwear and the sizes of footwear it can manufacture.

The SMP materials used for the footwear last manufacture in accordance with aspects herein are smart materials that have the property of having at least two states. The two states are generally known as a deformed state (temporary) and an original state (permanent). The switching between these at least two states may be induced by temperature (transition temperature 'T'), by a magnetic field, or in some cases by an electric field. Depending on the molecular constituents of the SMP materials, SMP materials may exhibit one or more of different physical properties such as hardness, elasticity, biodegradability, resiliency, etc. For example, for an SMP material that has temperature as its trigger for changing from its original state to its deformed state, the SMP material that may be originally rigid, when heated above its threshold or transition temperature T, will become elastic for manipulation into a new temporary shape. The new temporary shape may be retained by the SMP material by cooling the SMP material below its transition or threshold temperature, at which point the SMP material becomes rigid again. Subsequently when reheated to above the transition or threshold temperature, the SMP material will return to its memorized original shape, and when cooled, will become rigid again. Another characteristic of SMP materials is that while rigid, they demonstrate the strength to weight ratio of rigid polymers, and while flexible and elastic, their flexibility may be comparable to high quality elastomer polymers.

Thus, the dynamic SMP footwear last in accordance with the present invention may provide equal or greater benefits to the conventional polyethylene footwear lasts. For example, the dynamic footwear last may have equal or greater hardness, i.e. durability than the conventional high density polyethylene footwear last, which has a shore D hardness of approximately D69. The changeover from one size to another or from one shape to another of the dynamic SMP footwear last in accordance with aspects herein, may be done quickly and inline without disruption of production, thereby eliminating the steps of identifying a new last, searching for the new last in the inventory, retrieving the new last from the inventory, transporting the new last to the manufacturing system, and replacing the old last with the new last.

The dynamic footwear last in accordance with the present invention may be formed from a dynamic SMP footwear last-pre-form having a first size and a first shape that is generally smaller than the smallest size and shape of a footwear last required in a footwear manufacturing process, in an exemplary aspect. However, it is contemplated that the last preform may also have a first size comparable to a desired last size and shape, in alternative aspects. The dynamic SMP footwear last-pre-form may comprise an exterior surface and an interior surface, an internal volume defined by the interior surface, and an opening passing from the exterior surface to the interior volume. The SMP material of the dynamic SMP footwear last-pre-form may have a threshold transition temperature (T) at which the SMP material changes from a rigid state, to a moldable state, whereas when the SMP material is at a temperature that is below T, it is in its rigid state and when the SMP material is at a temperature above T, it is in its moldable state.

In an exemplary implementation of the present invention, initially, a dynamic SMP footwear last-pre-form may be produced by injection molding, heat molding, or any other suitable means, from an SMP material having a transition or threshold temperature T in a range suitable for a footwear last to be used in a footwear manufacturing process. The dynamic SMP footwear last-pre-form may be placed inside a mold having a molding cavity corresponding to the footwear last size and shape desired. Once the dynamic SMP footwear last-pre-form is placed inside the molding cavity of the mold, the dynamic SMP footwear last-pre-form may be attached to a fluid source. The mold may be heated to at least the threshold temperature T of the SMP material of the dynamic SMP footwear last-pre-form to induce the moldable state of the SMP material. Once in its moldable state, the internal volume of the dynamic SMP footwear last-pre-form inside the molding cavity of the mold may be filled with a fluid, such as air, to expand the internal volume until the exterior surface of the dynamic SMP footwear last-pre-form is in contact with the molding cavity walls of the mold. Once a full expansion is reached inside the mold, the necessary pressure inside the internal volume may be maintained by maintaining the fluid flowing to the internal volume of the formed footwear last while the footwear last is cooled to a temperature below T inside the mold to induce the SMP rigid state, finalizing the desired footwear last. The pressure inside the footwear last mold and the internal volume of the formed footwear last may be regulated with a pressure regulator.

Subsequent to the expansion and cooling, the finalized footwear last may be removed from the molding cavity of the mold for use in a footwear manufacturing process in a conventional manner. When a new type of footwear last is needed in the footwear manufacturing process, the process of heating the footwear last above the threshold temperature may be repeated using a second mold for the new type of footwear last needed. For example, when the next size of footwear needs to be manufactured, the formed footwear last may be placed in a mold having a molding cavity corresponding to the next size of a footwear last, and the forming process repeated beginning at the heating above the threshold temperature T.

In a different exemplary implementation of the present invention, the SMP dynamic SMP footwear last-pre-form may be heated above the threshold temperature T outside the desired footwear last mold. Once heated above T, the dynamic SMP footwear last-pre-form may be inserted into the molding cavity of the desired footwear last mold with the dynamic SMP footwear last-pre-form being in fluid communication with a fluid source. While the heated dynamic SMP footwear last-pre-form is inside the molding cavity of the desired footwear last mold, a constant stream of fluid may be introduced into the interior volume of the dynamic SMP footwear last-pre-form to cause the dynamic SMP footwear last-pre-form to expand and conform to the molding cavity of the footwear last mold. Once the dynamic SMP footwear last-pre-form is fully expanded within the mold, the fluid source may maintain the necessary pressure inside the internal volume of the formed footwear last while the formed footwear last is cooled to below T inside the footwear last mold to induce the rigid state of the SMP material of the footwear last. Once cooled, the fluid source may be removed from the footwear last, and the footwear last may be removed from the molding cavity of the mold.

Once the formed footwear last has been removed from the molding cavity of the mold, the footwear last may be used in a footwear manufacturing process in a conventional manner. When a new type (e.g., size, shape) of footwear last is needed in the footwear manufacturing process, the process of heating the footwear last above the threshold temperature may be repeated. In other words, the footwear last may be heated outside a mold to induce the SMP material to return to its dynamic SMP footwear last-pre-form state (e.g., a learned shape) and to its moldable state. Once the dynamic SMP footwear last-pre-form is in its moldable state, the dynamic SMP footwear last-pre-form may be placed inside a second mold for the new type of footwear last needed. For example, when the next size of footwear needs to be manufactured, the dynamic SMP footwear last-pre-form may be placed in a mold having a molding cavity corresponding to the next size of a footwear last, or a completely different type of footwear last, and the forming process may be repeated beginning at the application of pressurized fluid to expand the dynamic SMP footwear last-pre-form so that it conforms to the molding cavity of the mold.

In another different exemplary implementation of the present invention, the SMP dynamic SMP footwear last-pre-form may be placed inside a desired mold and attached to the fluid source. Then, once the desired mold is secured, a fluid heated above T may be pushed into the internal cavity of the dynamic SMP footwear last-pre-form thereby heating the SMP material above T and inducing the dynamic SMP footwear last-pre-form moldable state. Once in its moldable state, the dynamic SMP footwear last-pre-form may be expanded to conform to the molding cavity of the footwear last mold. Once the footwear last is fully formed, the formed footwear last may be cooled by switching to a fluid cooled below T and pushing the cooled fluid through the fluid source. This and other aspects of the present invention will be discussed in further detail in the Detailed Description.

### BRIEF DESCRIPTION OF THE DRAWING

The present invention is described in detail herein with reference to the attached drawing figures, wherein:
FIG. 1 depicts a dynamic SMP footwear last-pre-form and an outline of a formed footwear last in accordance with an aspect hereof;
FIG. 2A depicts a dynamic SMP footwear last-pre-form in fluid communication with a fluid source in accordance with an aspect hereof;
FIG. 2B depicts a cross-sectional view of the dynamic SMP footwear last-pre-form in FIG. 2A along the plane defined by the line 2B-2B, in accordance with an aspect hereof;
FIG. 2C depicts a cross-sectional view of the dynamic SMP footwear last preform in FIG. 2A along the plane defined by the line 2C-2C, in accordance with an aspect hereof;
FIG. 3 depicts a footwear last mold in accordance with an aspect hereof;
FIG. 4 depicts a closed mold enclosing a dynamic SMP footwear last-pre-form in accordance with an aspect hereof;
FIG. 5 depicts a block diagram representing a method of forming a footwear last from a dynamic SMP footwear last-pre-form in accordance with an aspect hereof;
FIG. 6 depicts a block diagram of an alternative method of forming a footwear last from a dynamic SMP footwear last-pre-form in accordance with an aspect hereof;
FIG. 7 depicts a cycle of using and re-using a dynamic SMP footwear last preform in accordance with an aspect hereof;
FIGS. 8A and 8B depict a formed footwear last in use in accordance with an aspect hereof; and
FIG. 9 depicts a block diagram representing a method for forming and using an SMP alloy footwear last-pre-form in accordance with an aspect hereof.

### DETAILED DESCRIPTION OF THE INVENTION

Aspects hereof provide systems and methods for providing a dynamic shape memory material, such as a shape memory polymer (SMP), footwear last that can be formed and reformed multiple times into footwear lasts of different shapes and sizes, thereby reducing the amount of footwear last inventory needed at a footwear manufacturing facility, while retaining the ability to manufacture the same number, or an increased number of footwear types and footwear sizes. These and other several advantages of having a reduced footwear last inventory will become apparent in accordance with aspects hereof.

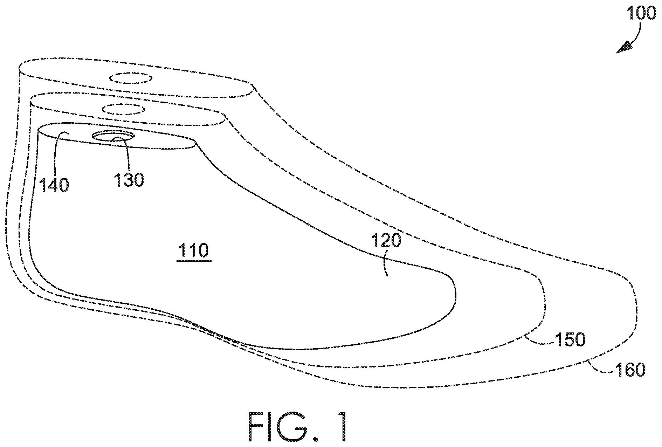

Referring now to FIG. 1, an exemplary implementation 100 of the dynamic SMP footwear last-pre-form 110 is illustrated. The dynamic SMP footwear last-pre-form 110 may be the SMP material of the dynamic SMP footwear last-pre-form's original (a learned state that the SMP will return to with appropriate trigger stimulus) state. The dynamic SMP footwear last preform 110 may take on any shape having two main characteristics: an internal volume and an opening in communication with the internal volume, in an exemplary aspect. The dynamic SMP footwear last-pre-form 110 may be defined by at least an external surface and the internal volume may be defined by at least an internal surface. The dynamic SMP footwear last-pre-form 110 may also have a thickness between the internal surface and the external surface. The thickness may be constant or may vary along portions of the dynamic SMP footwear last preform 110. An exemplary thickness is depicted in FIG. 1 for illustrative purposes.

In FIG. 1, a dynamic SMP footwear last-pre-form 110 may be originally shaped into the general shape of a footwear last having an interior surface (not shown), an internal volume (not shown), an external surface 120, top surface 140, and an opening 130. The original (learned/memorized) shape of the dynamic SMP footwear last-pre-form 110 may be of a size and shape that is smaller than the smallest footwear last needed in a certain footwear manufacturing process, giving the dynamic SMP footwear last-pre-form 110 the flexibility to be formed into a wide variety of footwear last shapes and sizes. For example, a single dynamic SMP footwear last-pre-form may be formed into footwear lasts ranging from US size 1 to US size 16. For instance, dynamic SMP footwear last-pre-form may be formed into a first footwear last 150 for use in the manufacture of a first footwear style and size. After the footwear manufacturing requiring footwear last 150 has been completed, footwear last 150 may be returned to the dynamic SMP footwear last-pre-form 110 original shape and re-formed into a second footwear last 160 for use in the manufacture of a second footwear size for the same style or a different style. In the case where the next footwear size for the same style is to be manufactured, the returning of the footwear last to its original shape may or may not be necessary.

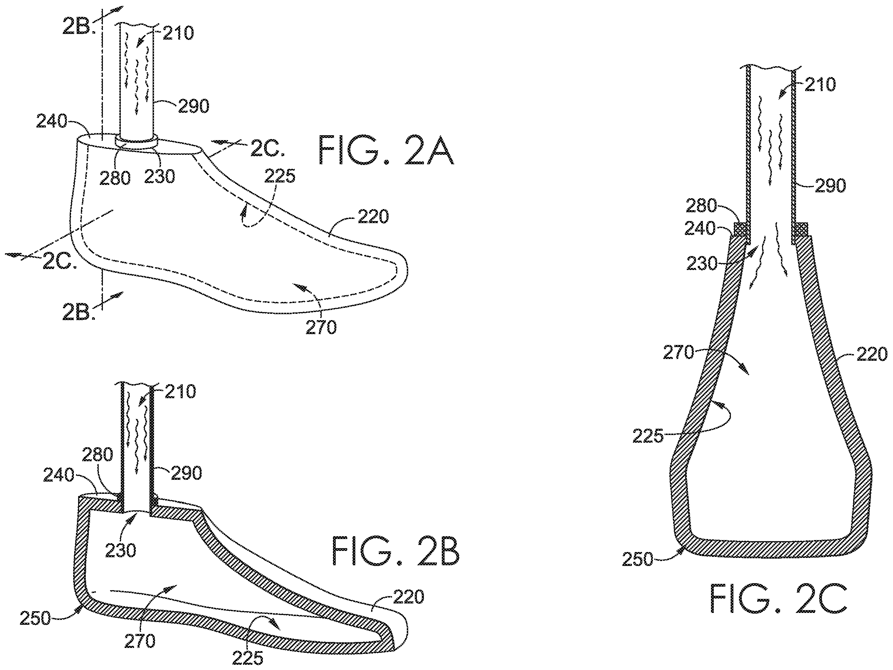

Referring now to FIG. 2A, a dynamic SMP footwear last-pre-form 200 is shown. As briefly described above, dynamic SMP footwear last-pre-form 200 may comprise an interior surface 225, an internal volume 270, an external surface 220, a top surface 240, and an opening 230 located at the top surface 240 of the dynamic SMP footwear last-pre-form 200. The opening 230 may be adapted to snuggly fit a fluid source pipe 290 from a fluid source (not shown), or alternatively, a connection valve 280 may be used to snuggly connect the dynamic SMP footwear last-pre-form opening 230 to the fluid source pipe 290. The connection valve 280 may allow for a snug fit between the dynamic SMP footwear last-pre-form and the fluid source to allow the fluid from the fluid source to travel from the fluid source to the internal volume of the dynamic SMP footwear last-pre-form at a controllable rate and pressure. The fluid 210 provided by fluid source may be a gas or a liquid. The fluid may, for example, be pressurized air, water, or any other pressurized fluid suitable for use according to aspects of the present invention.

In FIG. 2B, a cross-sectional view along the plane defined by the line 2B-2B in FIG. 2A is shown, and in FIG. 2C, a cross-sectional view along the plane defined by the line 2C-2C is shown. From FIGS. 2B and 2C, it can be seen that the dynamic SMP footwear last-pre-form 200 comprises a thickness 250 between the interior surface 225 and the external surface 220. It can also be seen that the internal volume 270 is in fluid communication with the fluid 210 entering from the fluid source pipe 290. The pressurized fluid 210 is used for the deformation of the dynamic SMP footwear last-pre-form, once the dynamic SMP footwear last-pre-form SMP material's moldable state has been activated. As discussed briefly above, SMP materials have a transition or threshold temperature T at which they exist in their memorized form and become deformable or moldable. The T is adjustable or tunable according to the molecular composition and structure of the SMP material of choice. For example, in some aspects of the present invention, the SMP material may be chosen to have a T that falls within a range of 50-80°C. In other aspects, T may be chosen to be at least 75°C. The SMP material of choice may be in its rigid state below T, and in a moldable and elastic state above T.

Several aspects may be considered when tuning T. For instance, a T that is above a temperature at which certain adhesives used in an upper manufacturing process may be desired such that the footwear last does not deform under the upper while the adhesives used on the upper are being activated. Or, alternatively, a T that is above a temperature at which the adhesives used for attaching a midsole and outsole to the upper, are activated, and may be desirable for the same reasons. Alternatively, if temperature is not chosen as the trigger for inducing the change from an original state to a deformable state in the SMP material, an electrical field, or a magnetic field may be used. However, for clarity and brevity, aspects of the present invention will continue to be described in terms of a dynamic SMP footwear last-pre-form 200 having temperature as its trigger for inducing the change from an original state to a deformable state.

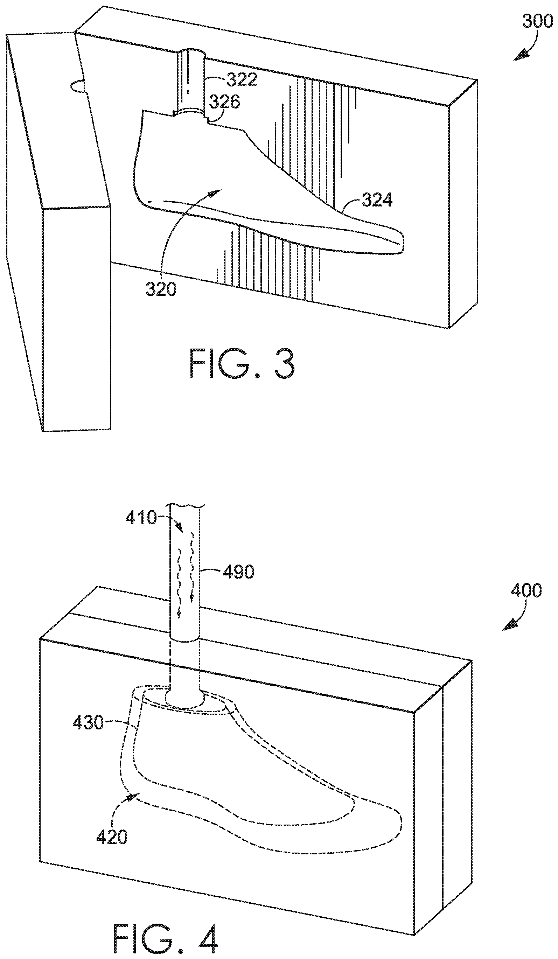

Now, turning to FIG. 3, an open mold 300 having an internal molding cavity 320 is shown. The mold 300 may be made of any suitable rigid material such as metal, synthetic materials (e.g. polymers), wood, etc. The molding cavity 320 of the mold 300 corresponds to a footwear last size and shape to be manufactured from the dynamic SMP footwear last-pre-form 200 shown in FIGS. 2A, 2B, and 2C. The mold 300 may have an opening for allowing the fluid source to be in fluid communication with the internal volume of the dynamic SMP-footwear last-pre-form while the SMP footwear last-pre-form is inside the molding cavity 320 of mold 300. The opening of the mold 300 may have at least a first section 324 to accommodate the dynamic SMP footwear last-pre-form and a second section 322 to accommodate the fittings for the fluid source such as, but not limited to the fluid source pipe 290. For example, if a connection valve 280, if used, may also need to be accommodated inside the molding cavity 320 of the mold 300. For simplicity, in FIG. 3, a mold 300 having only one molding cavity 320 is illustrated. However, the mold 300 may also comprise two or more molding cavities 320, for molding a pair or more of footwear lasts at one time, as opposed to a single footwear last at a time.

Turning now to FIG. 4, an assembled footwear last forming system is depicted, where the dynamic SMP footwear last-pre-form 430 is inside the molding cavity 420 of the closed mold 400. The fluid source pipe 490 is securely attached to the dynamic SMP footwear last-pre-form such that the fluid 410 from the fluid source is in fluid communication with the internal volume of the dynamic SMP footwear last-pre-form. Due to the possibilities of high pressure build up in the system, the system may further comprise a pressure regulator for ensuring precision, accuracy, and safety in the footwear last forming process. The system may additionally include a heating source and a cooling system (not shown). The heating source may be, for example, a conventional oven, an induction system, a convection oven, a microwave oven, or any other heating source suitable for use in accordance with the present invention. The cooling system may be, for example, a fluid cooling system, a gas cooling system, or any other suitable cooling system suitable for use in accordance with the present invention. As explained above, the dynamic SMP footwear last-pre-form will always be smaller than the molding cavity 420 of the mold 400 so that the dynamic SMP footwear last-pre-form can be expanded to conform with the molding cavity 420 of the mold 400 for manufacturing a footwear last of the size and shape corresponding to the molding cavity 420 of the mold 400. As such, storage for only one mold per footwear size and per footwear last type (in the case where different last types are required) may be required since the dynamic SMP footwear last-pre-form 430 can be formed and deformed multiple times in different molds. This is opposed to the vast storage space required for the several pairs of conventional footwear lasts for each footwear last size and footwear last type, which greatly reduces the spatial constraints typically faced in a footwear manufacturing facility.

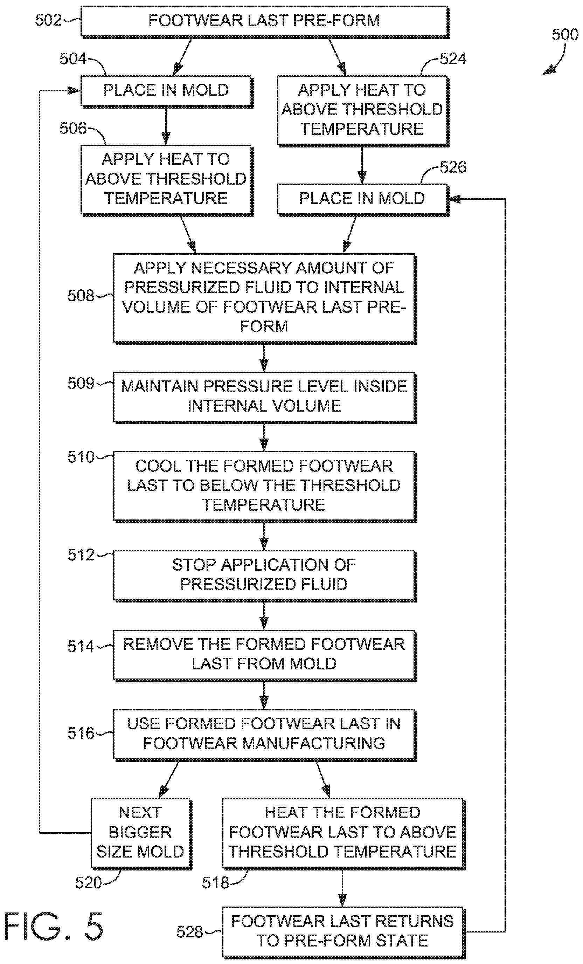

Turning now to FIG. 5, a flow chart 500 for illustrating a method in which a footwear last of a first size and shape may be formed from a dynamic SMP footwear last preform and used in a footwear manufacturing process is illustrated in accordance with aspects hereof. For example, two potential pathways are shown in flow chart 500.

For the first pathway, a dynamic SMP footwear last-pre-form at step 502 is initially provided, the SMP footwear last-pre-form may have a first size and shape that is smaller than a smallest size of footwear last required, for example, smaller than footwear size 1. At step 504, the dynamic SMP footwear last-pre-form may be placed into a molding cavity of a footwear last mold, and connected to a fluid source. The mold may be heated to above a threshold temperature T of the SMP material at step 506, at which the SMP material changes from its rigid state to its moldable state. Once the dynamic SMP footwear last-pre-form is in its moldable state inside the mold, a steady flow of pressurized fluid may be applied to the internal volume of the dynamic footwear last-pre-form at step 508. The pressurized fluid may induce the internal volume of the dynamic SMP footwear last-pre-form to expand at a controlled rate and pressure, pushing the external surface and the internal surface of the dynamic SMP footwear last-pre-form to conform to the internal molding cavity of the mold.

Once the dynamic SMP footwear last-pre-form is conformed to the molding cavity of the mold, a pressure inside the internal volume of the formed footwear last may be maintained at step 509, while the expanded footwear last-pre-form is cooled below the threshold temperature T at step 510 to induce the rigid state of the SMP polymer material to finalize the formation of the footwear last of the first size and shape. The cooling may be performed in a fluid cooling system or an air cooling system. Once the formed footwear last has been cooled, the application of pressurized fluid may be stopped at step 512 and the mold may be opened to remove formed footwear last may be removed from the mold at step 514.

Once the footwear last is removed from the mold at step 514, the footwear last is ready to be used in a footwear manufacturing process at step 516. When the formed footwear last is no longer needed, a new footwear last mold for a bigger footwear last or the next footwear size last may be chosen at step 520. Then, the process may be repeated for the new mold starting at step 504 (or 524 in exemplary aspects).

For the second pathway, a dynamic SMP footwear last-pre-form at the step 502 is the initial starting point for this example. The dynamic SMP footwear last-pre-form may be pre-heated to above its threshold temperature T prior to placing the dynamic SMP footwear last preform in the molding cavity of a mold at step 524. The pre-heating may be done in a conventional oven, using a convection system, or alternatively, using a microwave oven. The pre-heated and moldable dynamic footwear last-pre-form may be connected to the fluid source and then be placed in the molding cavity of a footwear last mold at step 526. Alternatively, the dynamic SMP footwear last-pre-form may be connected to the fluid source after the dynamic SMP footwear last-pre-form is placed in the molding cavity of the mold. Then, similarly to the first pathway, a necessary amount of pressurized fluid may be applied and maintained inside the internal volume of the dynamic SMP footwear last-pre-form in steps 508 and 509. Then, after the dynamic SMP footwear last-pre-form has been conformed to the molding cavity of the mold, the formed footwear last may be cooled at step 510. Subsequently, the pressurized fluid flow to the internal volume may be stopped at step 512 and the formed footwear last may be removed from the molding cavity of the mold at step 514. The formed footwear last may be ready for use in a footwear manufacturing process at step 516.

Once the need for a new footwear last arises, the formed footwear last may be heated above its threshold temperature T once again at step 518, for allowing the formed footwear last to return to its original footwear last-pre-form shape at step 528. The return to the last-pre-form shape may be accomplished by leveraging the learned/memorized characteristics of the SMP. Therefore, an additional mechanical mechanism may be avoided that molds the footwear last-pre-form back to the starting shape/size. Once returned to its footwear last preform shape, the dynamic SMP footwear last-pre-form may be placed in a new mold for forming a new footwear last at step 526, and the process repeated multiple times. Depending on the resiliency of the SMP material, the dynamic SMP footwear last-pre-form may be cycled through 500 to 10,000 times without loss of dimensions.

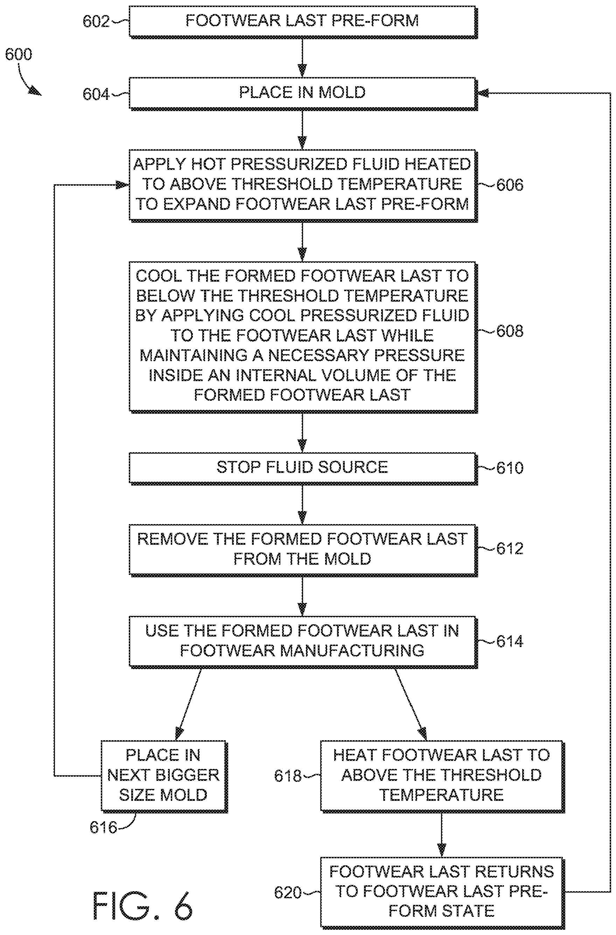

Referring now to FIG. 6, an alternative method 600 for cycling the dynamic SMP footwear last-pre-form is shown, in accordance with aspects hereof. Similar to the method shown in FIG. 5, the method 600 also has two pathways. For instance, for the first pathway, a dynamic footwear last-pre-form may be provided at step 602. The dynamic SMP footwear last-pre-form may be placed in a molding cavity of a first footwear last mold at step 604. The dynamic SMP footwear last-pre-form may be connected to a fluid source prior to, or after being placed in the molding cavity of the first footwear last mold. Once connected to the fluid source and once the dynamic SMP footwear last-pre-form is secured in the first mold, a hot pressurized fluid heated to a temperature above the SMP material's transition or threshold temperature T, of the dynamic SMP footwear last-pre-form, may be applied to the internal volume of the dynamic SMP footwear last-pre-form at step 606. At step 608, subsequent to the heating and expansion of the dynamic SMP footwear last-pre-form to conform to the molding cavity of the first mold, take place, the heated fluid may be switched to a cooled fluid, the temperature of the fluid being below T to cool the formed last, while maintaining the necessary pressure inside the internal volume of the formed footwear last. The pressure inside the internal volume of the footwear last may be regulated by any suitable means such as a pressure regulator, to ensure the safety.

Once the formation of the footwear last has been completed, the fluid source may be stopped at step 610. The formed footwear last may be removed from the molding cavity of the first mold at step 612, and used in a footwear manufacturing process at step 614. When the need for a bigger size footwear last arises, the formed footwear last may be placed in a molding cavity of a second mold corresponding to a bigger size of footwear last, for example, a next size footwear last at step 616, and the method may be repeated at step 606.

In the alternative pathway, once the need for a different footwear last arises, the footwear last used in the footwear manufacturing process at step 614, may be heated above T at step 618 to return the footwear last to its footwear last-pre-form state at step 620 by way of the SMP learned characteristics. The heating of the footwear last at step 618 may be done by using, for example, the fluid source to pump a heated fluid to the internal volume of the footwear last, a conventional oven, a microwave oven, an induction system, or any other suitable means. Once returned to its footwear pre-form state, the process may be repeated at step 604 using a new mold.

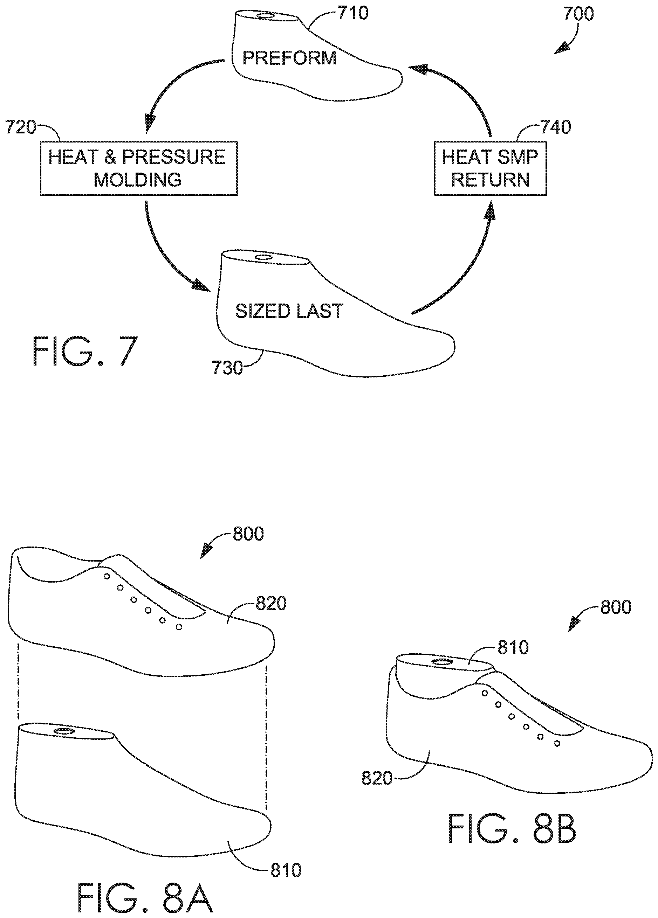

FIG. 7 depicts the cycling 700 of the dynamic footwear last-pre-form 710 described above in reference to FIGS. 5 and 6. The dynamic SMP footwear last-pre-form 710 may be formed into a sized footwear last 730 by heat and pressure molding at 720, where the heat is above a threshold or transition temperature T of the SMP material of the dynamic SMP footwear last-pre-form. When the formed sized last 730 is no longer needed, or a different footwear last is needed, the sized last 730 may be returned to its original footwear last-pre-form state 710 by applying heat above T of the SMP material at 740. As described above, depending on the resiliency of the SMP material used, the dynamic SMP footwear last-pre-form may be cycled through 700 from 500 to 10,000 times without exhibiting dimensional loss and physical stability.

FIGS. 8A and 8B depict a formed SMP footwear last 810 in use in a footwear manufacturing process 800. The footwear last 810 may be used to form upper 820 into the final shape of the footwear to be manufactured. FIG. 8B depicts footwear last 810 holding upper 820 in place for further footwear manufacturing steps such as, for example, attaching a strobel, attaching a midsole, attaching an outsole, or any combination thereof. Additionally, the footwear last may be used to hold the footwear upper in place while the upper is further reinforced, or embellished, depending on the footwear type. The footwear last may be used in any conventional way, or any necessary way for the manufacture of footwear.

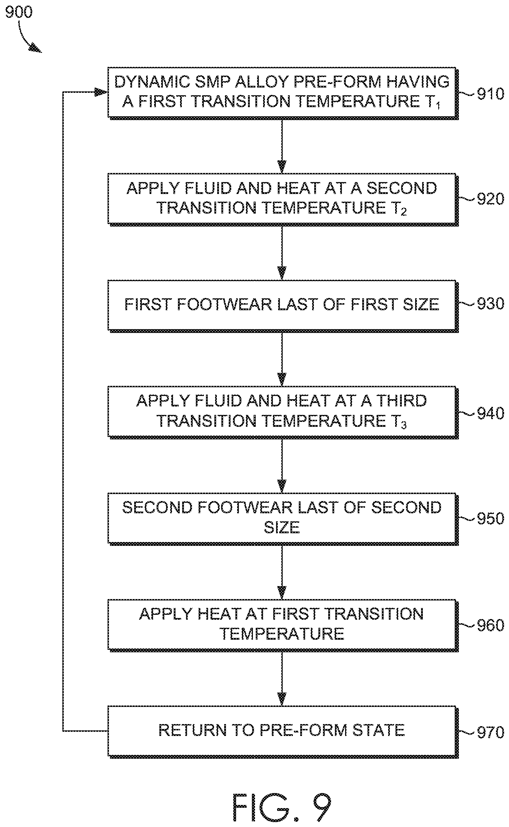

FIG. 9 depicts a different method for forming a footwear last in accordance with the present invention. It has been described that the transition or threshold temperature T of SMP materials is tunable to the specific requirements needed in the processes employing the SMP materials. Another property of the SMP materials is that some SMP materials may be compatible and mixable, thereby rendering an SMP "alloy." For example, two or more SMP materials having different transition temperatures may be mixed together to form the SMP alloy. Then, the SMP alloy material may be formed into a first memorized shape at a first transition temperature T1. Then, the SMP alloy material may be formed into a second memorized shape at a second transition temperature T2, and so on for the number of SMP materials included in the SMP alloy material. In accordance to this exemplary use of SMP materials in a footwear last, an SMP alloy footwear last-pre-form may or may not comprise an internal volume.

In the case that the SMP alloy footwear last-pre-form comprises an internal volume, the heat may be applied in any suitable way such as, a fluid source to pump a heated fluid to the internal volume of the footwear last-pre-form, a conventional oven, a microwave oven, an induction system, or any other suitable means. This SMP alloy footwear last-pre-form may not require a mold to transition from a first footwear last size to a second footwear last size. For example, in method 900, an SMP alloy footwear last-pre-form may be provided at step 910. The SMP alloy footwear last-pre-form material may have a combination of, for example, three SMP materials having different transition temperatures T1, T2, and T3 respectively. The SMP alloy material may be "taught" to have a footwear last-pre-form size and shape at T 1, a first footwear last size at T2, and a second footwear last size at T3. In order to induce the changes the desired changes in the SMP alloy footwear pre-form, the SMP alloy footwear last-pre-form may be heated by applying a fluid heated to T2 at step 920, and rapidly cooled, in order to form a first footwear last having a first size at step 930. Then, in order to induce another change in the first footwear last of step 930, a fluid heated to T3 may be applied to the first footwear last at step 940, and rapidly cooled, in order to form a second footwear last at step 950. The second footwear last formed at step 950 may be returned to its pre-form state by applying a fluid heated to T1 at step 960, and the second footwear last may return to its pre-form state at step 970. This process may be repeated multiple times for as many materials are included in the SMP alloy material. A mold may or may not be used in the method 900.

In the case that the SMP alloy footwear last-pre-form does not have an internal volume, the change from one size to the other may be induced by simply exposing the SMP alloy footwear last-pre-form to the different transition temperatures of the alloy components to induce a particular footwear last size. The SMP alloy footwear last-pre-form material may be exposed to heat via, for example, a conventional oven, a microwave oven, an induction system, or any other suitable means.

From the foregoing, it will be seen that this invention is one well adapted to attain all the ends and objects hereinabove set forth together with other advantages which are inherent to the structure.

## Claims

1. A shape memory polymer footwear last system comprising a dynamic shape memory polymer (SMP) footwear last-pre-form (110, 200, 430, 710) of a first size, the pre-form comprising: (a) an interior surface (225) and an exterior surface; (b) an internal volume (270) defined by the interior surface (225); (c) an opening (130, 230) passing from the exterior surface to the internal volume (270); a heat source for heating the dynamic SMP footwear last-pre-form (110, 200, 430, 710) above a threshold temperature (T); a first mold (300, 400) comprising a first cavity, the first cavity having a second size corresponding to a first footwear last (150, 810), wherein the first size of the dynamic SMP footwear last-pre-form (110, 200, 430, 710) is less than the second size of the first footwear last (150, 810); and a cooling source for cooling the first footwear last (150, 810).

2. The shape memory polymer footwear last system of claim 1, wherein the heat source comprises one of a conventional oven, an induction system, and a microwave oven.

3. The shape memory polymer footwear last system of claim 1, further comprising a compressed fluid source.

4. The shape memory polymer of footwear last system of claim 3, wherein the system further comprises a connection valve (280) for connecting the fluid source to the opening (130, 230) of the dynamic SMP footwear last-pre-form (110, 200, 430, 710), and, optionally,
wherein the connection valve (280) provides a pressure tight fit between the dynamic SMP footwear last-pre-form (110, 200, 430, 710) and the fluid source to allow the fluid (210, 410) from the fluid source to travel from the fluid source to the internal volume (270) of the dynamic SMP footwear last-pre-form (110, 200, 430, 710) at a controllable rate and pressure.

5. The shape memory polymer footwear last system of claim 1, wherein the cooling source is one selected from a fluid cooling system and a gas cooling system.

6. The shape memory polymer footwear last system of claim 1, wherein the dynamic SMP footwear last-pre-form (110, 200, 430, 710) is flexible when heated above the threshold temperature (T) and substantially rigid below the threshold temperature (T); or
wherein the dynamic SMP footwear last-pre-form (110, 200, 430, 710) is re-shapeable a plurality of times.

7. The shape memory polymer footwear last system of claim 1, wherein the system further comprises a pressurized fluid source in fluid communication with the internal volume (270) of the dynamic SMP footwear last-pre-form (110, 200, 430, 710), and wherein the first mold (300, 400) comprises an opening for the fluid source to remain in fluid communication with the footwear last-pre-form (110, 200, 430, 710) while the footwear last-pre-form (110, 200, 430, 710) is inside the first mold (300, 400).

8. The shape memory polymer footwear last system of claim 1, wherein the first mold (300, 400) comprises one material selected from a metal material and a polymer material; or
wherein the dynamic SMP footwear last-pre-form (110, 200, 430, 710) can be formed into a plurality of footwear lasts ranging in size from US sizes 1-16; or
wherein the first size of the SMP footwear last-pre-form (110, 200, 430, 710) is smaller than a smallest footwear last for which a mold (300, 400) is included in the last system.

9. A method for forming a footwear last from a shape memory polymer (SMP) footwear last-pre-form (110, 200, 430, 710), the method comprising: providing the SMP footwear last-pre-form (110, 200, 430, 710) having a first size and shape; heating the SMP footwear last-pre-form (110, 200, 430, 710) above a threshold temperature (T); placing the SMP footwear last-pre-form (110, 200, 430, 710) into a first molding cavity (320, 420) of a first footwear last mold (300, 400) for producing a first footwear last (150, 810) having a second size and a second shape; expanding the SMP footwear last-pre-form (110, 200, 430, 710) inside the first molding cavity (320, 420) of the first footwear last mold (300, 400) to produce the first footwear last (150, 810); cooling the first footwear last (150, 810); and removing the first footwear last (150, 810) from the first footwear last mold (300, 400).

10. The method of claim 9, wherein the threshold temperature (T) is at least 75°C; or
wherein the threshold temperature (T) is between 50°C and 80°C.

11. The method of claim 9, wherein the heating of the SMP footwear last-pre-form (110, 200, 430, 710) is performed after the SMP footwear last-pre-form (110, 200, 430, 710) has been placed into the first molding cavity (320, 420) of the first footwear last mold (300, 400), and, optionally,
wherein the heating of the SMP footwear last-pre-form (110, 200, 430, 710) is performed before the SMP footwear last-pre-form (110, 200, 430, 710) is placed into the first molding cavity (320, 420) of the first footwear last mold (300, 400).

12. The method of claim 9, wherein the first footwear last (150, 810) is cooled with one of a fluid cooling system or a gas cooling system.

13. A method for using a single shape memory polymer (SMP) footwear last-pre-form (110, 200, 430, 710) in the production of footwear of different shapes and sizes, the method comprising: providing the SMP footwear last-pre-form (110, 200, 430, 710); heating the SMP footwear last-pre-form (110, 200, 430, 710) above a threshold temperature (T); placing the heated SMP footwear last-pre-form (110, 200, 430, 710) into a first molding cavity (320, 420) of a first mold (300, 400) for producing a first footwear last (150, 810) having a first size and a first shape; expanding the SMP footwear last-pre-form (110, 200, 430, 710) inside the first molding cavity (320, 420) of the first mold (300, 400) to form the first footwear last (150, 810); cooling the first footwear last (150, 810); removing the first footwear last (150, 810) from the first molding cavity (320, 420) of the first mold (300, 400); and using the first footwear last (150, 810) having the first size and the first shape in a first footwear production process of a first plurality of footwear.

14. The method of claim 13 further comprising: placing the first footwear last (150, 810) into a second molding cavity (320, 420) of a second mold (300, 400) for producing a second footwear last (160, 810) having a second size and a second shape; heating the first footwear last (150, 810) above the threshold temperature (T) inside the second molding cavity (320, 420) of the second mold (300, 400); expanding the first footwear last (150, 810) inside the second molding cavity (320, 420) of the second mold (300, 400) to form the second footwear last (160, 810); cooling the second footwear last (160, 810); removing the second footwear last (160, 810) from the second molding cavity (320, 420) of the second mold (300, 400); and using the second footwear last (160, 810) having the second size and the second shape in a second footwear production process of a second plurality of footwear, and, optionally,
wherein the first size of the first footwear last (150, 810) is less than the second size of the second footwear last (160, 810).

15. The method of claim 13 further comprising: heating the first footwear last (150, 810) above the threshold temperature (T), wherein once heated, the first footwear last (150, 810) returns to the SMP footwear last-pre-form (110, 200, 430, 710); heating the SMP footwear last-pre-form (110, 200, 430, 710) above the threshold temperature (T); placing the SMP footwear last-pre-form (110, 200, 430, 710) into a second molding cavity (320, 420) of a second mold (300, 400) for producing a second footwear last (160, 810) having a second size and a second shape; expanding the SMP footwear last-pre-form (110, 200, 430, 710) inside the second molding cavity (320, 420) of the second mold (300, 400) to form the second footwear last (160, 810); cooling the second footwear last (160, 810); removing the second footwear last (160, 810) from the second molding cavity (320, 420) of the second mold (300, 400); and using the second footwear last (160, 810) having the second size and the second shape in a second footwear production process of a second plurality of footwear.

## Patentansprüche

1. Schuhwerkleistensystem aus Formgedächtnispolymer, das eine Schuhwerkleisten-Vorform (110, 200, 430, 710) aus dynamischem Formgedächtnispolymer (Shape Memory Polymer - SMP) mit einer ersten Größe umfasst, wobei die Vorform Folgendes umfasst: (a) eine Innenoberfläche (225) und eine Außenoberfläche; (b) ein Innenvolumen (270), das durch die Innenoberfläche (225) definiert ist; (c) eine Öffnung (130, 230), die von der Außenoberfläche zum Innenvolumen (270) verläuft; eine Wärmequelle zum Erhitzen der Schuhwerkleisten-Vorform (110, 200, 430, 710) aus dynamischem Formgedächtnispolymer über eine Schwellentemperatur (T); eine erste Form (300, 400), die einen ersten Hohlraum umfasst, wobei der erste Hohlraum eine zweite Größe aufweist, die einer ersten Schuhwerkleiste (150, 810) entspricht, wobei die erste Größe der Schuhwerkleisten-Vorform aus dynamischem Formgedächtnispolymer (110, 200, 430, 710) kleiner als die zweite Größe der ersten Schuhwerkleiste (150, 810) ist; und eine Kühlquelle zum Kühlen der ersten Schuhwerkleiste (150, 810).

2. Schuhwerkleistensystem aus Formgedächtnispolymer nach Anspruch 1, wobei die Wärmequelle eine von einem herkömmlichen Ofen, einem Induktionssystem und einem Mikrowellenofen umfasst.

3. Schuhwerkleistensystem aus Formgedächtnispolymer nach Anspruch 1, das überdies eine Druckfluidquelle umfasst.

4. Schuhwerkleistensystem aus Formgedächtnispolymer nach Anspruch 3, wobei das System überdies ein Verbindungsventil (280) zum Verbinden der Fluidquelle mit der Öffnung (130, 230) der Schuhwerkleisten-Vorform (110, 200, 430, 710) aus dynamischem Formgedächtnispolymer umfasst, und
wobei wahlweise das Verbindungsventil (280) einen druckdichten Sitz zwischen der Schuhwerkleisten-Vorform (110, 200, 430, 710) aus dynamischem Formgedächtnispolymer und der Fluidquelle bereitstellt, um es dem Fluid (210, 410) von der Fluidquelle zu ermöglichen, sich mit einer/einem Steuer- bzw. regelbaren Geschwindigkeit und Druck von der Fluidquelle zum Innenvolumen (270) der Schuhwerkleisten-Vorform (110, 200, 430, 710) aus dynamischem Formgedächtnispolymer zu bewegen.

5. Schuhwerkleistensystem aus Formgedächtnispolymer nach Anspruch 1, wobei die Kühlquelle eine ist, die von einem Fluidkühlsystem und einem Gaskühlsystem ausgewählt ist.

6. Schuhwerkleistensystem aus Formgedächtnispolymer nach Anspruch 1, wobei die Schuhwerkleisten-Vorform (110, 200, 430, 710) aus dynamischem Formgedächtnispolymer elastisch ist, wenn sie über die Schwellentemperatur (T) erhitzt ist, und unterhalb der Schwellentemperatur (T) im Wesentlichen starr ist; oder
wobei die Schuhwerkleisten-Vorform (110, 200, 430, 710) aus dynamischem Formgedächtnispolymer eine Vielzahl von Malen neu formbar ist.

7. Schuhwerkleistensystem aus Formgedächtnispolymer nach Anspruch 1, wobei das System überdies eine Druckfluidquelle in Fluidverbindung mit dem Innenvolumen (270) der Schuhwerkleisten-Vorform (110, 200, 430, 710) aus dynamischem Formgedächtnispolymer umfasst, und wobei die erste Form (300, 400) eine Öffnung für die Fluidquelle umfasst, um in Fluidverbindung mit der Schuhwerkleisten-Vorform (110, 200, 430, 710) zu bleiben, während die Schuhwerkleisten-Vorform (110, 200, 430, 710) sich im Innern der ersten Form (300, 400) befindet.

8. Schuhwerkleistensystem aus Formgedächtnispolymer nach Anspruch 1, wobei die erste Form (300, 400) ein Material umfasst, das von einem Metallmaterial und einem Polymermaterial ausgewählt ist; oder
wobei die Schuhwerkleisten-Vorform (110, 200, 430, 710) aus dynamischem Formgedächtnispolymer in eine Vielzahl von Schuhwerkleisten geformt werden kann, deren Größe in einem Bereich der US-Größen von 1 bis 16 liegt; oder wobei die erste Größe der Schuhwerkleisten-Vorform (110, 200, 430, 710) aus Formgedächtnispolymer kleiner als eine kleinste Schuhwerkleiste ist, für die eine Form (300, 400) in dem Leistensystem umfasst ist.

9. Verfahren zum Bilden einer Schuhwerkleiste von einer Schuhwerkleisten-Vorform (110, 200, 430, 710) aus Formgedächtnispolymer, wobei das Verfahren Folgendes umfasst: Bereitstellen der Schuhwerkleisten-Vorform (110, 200, 430, 710) aus Formgedächtnispolymer, die eine erste Größe und Form aufweist; Erhitzen der Schuhwerkleisten-Vorform (110, 200, 430, 710) aus Formgedächtnispolymer über eine Schwellentemperatur (T); Platzieren der Schuhwerkleisten-Vorform (110, 200, 430, 710) aus Formgedächtnispolymer in einen ersten Formhohlraum (320, 420) einer ersten Schuhwerkleistenform (300, 400) zum Herstellen einer ersten Schuhwerkleiste (150, 810), die eine zweite Größe und eine zweite Form aufweist; Schäumen der Schuhwerkleisten-Vorform (110, 200, 430, 710) aus Formgedächtnispolymer im Innern des ersten Formhohlraums (320, 420) der ersten Schuhwerkleistenform (300, 400) zum Herstellen der ersten Schuhwerkleiste (150, 810); Kühlen der ersten Schuhwerkleiste (150, 810); und Entfernen der ersten Schuhwerkleiste (150, 810) von der ersten Schuhwerkleistenform (300, 400).

10. Verfahren nach Anspruch 9, wobei die Schwellentemperatur (T) mindestens 75 °C beträgt; oder
wobei die Schwellentemperatur (T) zwischen 50 °C und 80 °C beträgt.

11. Verfahren nach Anspruch 9, wobei das Erhitzen der Schuhwerkleisten-Vorform (110, 200, 430, 710) aus Formgedächtnispolymer durchgeführt wird, nachdem die Schuhwerkleisten-Vorform (110, 200, 430, 710) aus Formgedächtnispolymer in dem ersten Formhohlraum (320, 420) der ersten Schuhwerkleistenform (300, 400) platziert wurde, und
wobei wahlweise das Erhitzen der Schuhwerkleisten-Vorform (110, 200, 430, 710) aus Formgedächtnispolymer durchgeführt wird, bevor die Schuhwerkleisten-Vorform (110, 200, 430, 710) aus Formgedächtnispolymer in dem ersten Formhohlraum (320, 420) der ersten Schuhwerkleistenform (300, 400) platziert wird.

12. Verfahren nach Anspruch 9, wobei die erste Schuhwerkleiste (150, 810) mit einem von einem Fluidkühlsystem oder einem Gaskühlsystem gekühlt wird.

13. Verfahren zur Verwendung einer einzelnen Schuhwerkleisten-Vorform (110, 200, 430, 710) aus Formgedächtnispolymer bei der Herstellung von Schuhwerk mit verschiedenen Formen und Größen, wobei das Verfahren Folgendes umfasst: Bereitstellen der Schuhwerkleisten-Vorform (110, 200, 430, 710) aus Formgedächtnispolymer; Erhitzen der Schuhwerkleisten-Vorform (110, 200, 430, 710) aus Formgedächtnispolymer über eine Schwellentemperatur (T); Platzieren der erhitzten Schuhwerkleisten-Vorform (110, 200, 430, 710) aus Formgedächtnispolymer in einen ersten Formhohlraum (320, 420) einer ersten Form (300, 400) zum Herstellen einer ersten Schuhwerkleiste (150, 810), die eine erste Größe und eine erste Form aufweist; Schäumen der Schuhwerkleisten-Vorform (110, 200, 430, 710) aus Formgedächtnispolymer im Innern des ersten Formhohlraums (320, 420) der ersten Form (300, 400) zum Bilden der ersten Schuhwerkleiste (150, 810); Kühlen der ersten Schuhwerkleiste (150, 810); Entfernen der ersten Schuhwerkleiste (150, 810) von dem ersten Formhohlraum (320,420) der ersten Form (300, 400); und Verwenden der ersten Schuhwerkleiste (150, 810), die die erste Größe und die erste Form aufweist, in einem ersten Schuhwerk-Herstellungsprozess einer ersten Vielzahl von Schuhwerken.

14. Verfahren nach Anspruch 13, überdies umfassend: Platzieren der ersten Schuhwerkleiste (150, 810) in einen zweiten Formhohlraum (320, 420) einer zweiten Form (300, 400) zum Herstellen einer zweiten Schuhwerkleiste (160, 810), die eine zweite Größe und eine zweite Form aufweist; Erhitzen der ersten Schuhwerkleiste (150, 810) über die Schwellentemperatur (T) im Innern des zweiten Formhohlraums (320, 420) der zweiten Form (300, 400); Schäumen der ersten Schuhwerkleiste (150, 810) im Innern des zweiten Formhohlraums (320, 420) der zweiten Form (300, 400) zum Bilden der zweiten Schuhwerkleiste (160, 810); Kühlen der zweiten Schuhwerkleiste (160; 810); Entfernen der zweiten Schuhwerkleiste (160; 810) von dem zweiten Formhohlraum (320, 420) der zweiten Form (300, 400); und Verwenden der zweiten Schuhwerkleiste (160, 810), die die zweite Größe und die zweite Form aufweist, in einem zweiten Schuhwerk-Herstellungsprozess einer zweiten Vielzahl von Schuhwerken, und
wobei wahlweise die erste Größe der ersten Schuhwerkleiste (150, 810) kleiner als die zweite Größe der zweiten Schuhwerkleiste (160, 810) ist.

15. Verfahren nach Anspruch 13, überdies umfassend: Erhitzen der ersten Schuhwerkleiste (150, 810) über die Schwellentemperatur (T), wobei die erste Schuhwerkleiste (150, 810), nachdem sie erhitzt wurde, in die Schuhwerkleisten-Vorform (110, 200, 430, 710) aus Formgedächtnispolymer zurückkehrt; Erhitzen der Schuhwerkleisten-Vorform (110, 200, 430, 710) aus Formgedächtnispolymer über die Schwellentemperatur (T); Platzieren der Schuhwerkleisten-Vorform (110,200,430, 710) aus Formgedächtnispolymer in einen zweiten Formhohlraum (320, 420) einer zweiten Form (300, 400) zum Herstellen einer zweiten Schuhwerkleiste (160, 810), die eine zweite Größe und eine zweite Form aufweist; Schäumen der Schuhwerkleisten-Vorform (110, 200, 430, 710) aus Formgedächtnispolymer im Innern des zweiten Formhohlraums (320, 420) der zweiten Form (300, 400) zum Bilden der zweiten Schuhwerkleiste (160, 810); Kühlen der zweiten Schuhwerkleiste (160, 810); Entfernen der zweiten Schuhwerkleiste (160, 810) von dem zweiten Formhohlraum (320, 420) der zweiten Form (300, 400); und Verwenden der zweiten Schuhwerkleiste (160, 810), die die zweite Größe und die zweite Form aufweist, in einem zweiten Schuhwerk-Herstellungsprozess einer zweiten Vielzahl von Schuhwerken.

## Revendications

1. Système de forme à monter d'article de chaussures en polymère à mémoire de forme comportant une pré-forme de forme à monter d'article de chaussures en polymère à mémoire de forme (SMP) (110, 200, 430, 710) dynamique d'une première taille, la pré-forme comportant : (a) une surface intérieure (225) et une surface extérieure ; (b) un volume interne (270) défini par la surface intérieure (225) ; (c) une ouverture (130, 230) passant de la surface extérieure au volume interne (270) ; une source de chaleur afin de chauffer la pré-forme de forme à monter d'article de chaussures SMP (110, 200, 430, 710) dynamique au-dessus d'une température seuil (T) ; un premier moule (300, 400) comportant une première cavité, la première cavité ayant une seconde taille correspondant à une première forme à monter d'article de chaussures (150, 810), dans lequel la première taille de la pré-forme de forme à monter d'article de chaussures SMP (110, 200, 430, 710) dynamique est inférieure à la seconde taille de la première forme à monter d'article de chaussures (150, 810) ; et une source de refroidissement afin de refroidir la première forme à monter d'article de chaussures (150, 810).

2. Système de forme à monter d'article de chaussures en polymère à mémoire de forme selon la revendication 1, dans lequel la source de chaleur comporte un élément parmi un four conventionnel, un système d'induction et un four à micro-ondes.

3. Système de forme à monter d'article de chaussures en polymère à mémoire de forme selon la revendication 1, comportant en outre une source de fluide compressé.

4. Polymère à mémoire de forme de système de forme à monter d'article de chaussures selon la revendication 3, dans lequel le système comporte en outre une valve de raccordement (280) afin de raccorder la source de fluide à l'ouverture (130, 230) de la pré-forme de forme à monter d'article de chaussures SMP (110, 200, 430, 710) dynamique et, de manière facultative,
dans lequel la valve de raccordement (280) fournit un ajustement étanche à la pression entre la pré-forme de forme à monter d'article de chaussures SMP (110, 200, 430, 710) dynamique et la source de fluide afin de permettre au fluide (210, 410) provenant de la source de fluide de se déplacer de la source de fluide jusqu'au volume interne (270) de la pré-forme de forme à monter d'article de chaussures SMP (110, 200, 430, 710) dynamique à un taux et une pression pouvant être régulés.

5. Système de forme à monter d'article de chaussures en polymère à mémoire de forme selon la revendication 1, dans lequel la source de refroidissement est un élément sélectionné parmi un système de refroidissement de fluide et un système de refroidissement de gaz.

6. Système de forme à monter d'article de chaussures en polymère à mémoire de forme selon la revendication 1, dans lequel la pré-forme de forme à monter d'article de chaussures SMP (110, 200, 430, 710) dynamique est souple lorsqu'elle est chauffée au-dessus de la température seuil (T) et sensiblement rigide en dessous de la température seuil (T) ; ou
dans lequel la pré-forme de forme à monter d'article de chaussures SMP (110, 200, 430, 710) dynamique peut être remise à la forme une pluralité de fois.

7. Système de forme à monter d'article de chaussures en polymère à mémoire de forme selon la revendication 1, dans lequel le système comporte en outre une source de fluide sous pression en communication fluidique avec le volume interne (270) de la pré-forme de forme à monter d'article de chaussures SMP (110, 200, 430, 710) dynamique et dans lequel le premier moule (300, 400) comporte une ouverture pour que la source de fluide reste en communication fluidique avec la pré-forme de forme à monter d'article de chaussures (110, 200, 430, 710) tandis que la pré-forme de forme à monter d'article de chaussures (110, 200, 430, 710) est à l'intérieur du premier moule (300, 400).

8. Système de forme à monter d'article de chaussures en polymère à mémoire de forme selon la revendication 1, dans lequel le premier moule (300, 400) comporte un matériau sélectionné parmi un matériau en métal et un matériau en polymère ; ou
dans lequel la pré-forme de forme à monter d'article de chaussures SMP (110, 200, 430, 710) dynamique peut être constituée en une pluralité de formes à monter d'article de chaussures dans des tailles allant des tailles américaines 1 à 16 ; ou
dans lequel la première taille de la pré-forme de forme à monter d'article de chaussures SMP (110, 200, 430, 710) est inférieure à une forme à monter d'article de chaussures la plus petite pour laquelle un moule (300, 400) est inclus dans le système de forme à monter.

9. Procédé afin de constituer une forme à monter d'article de chaussures à partir d'une pré-forme de forme à monter d'article de chaussures en polymère à mémoire de forme (SMP) (110, 200, 430, 710), le procédé comportant :
la fourniture de la pré-forme de forme à monter d'article de chaussures SMP (110, 200, 430, 710) ayant une première taille et forme ; le chauffage de la pré-forme de forme à monter d'article de chaussures SMP (110, 200, 430, 710) au-dessus d'une température seuil (T) ; le placement de la pré-forme de forme à monter d'article de chaussures SMP (110, 200, 430, 710) dans une première cavité de moulage (320, 420) d'un premier moule (300, 400) de forme à monter d'article de chaussures afin de produire une première forme à monter d'article de chaussures (150, 810) ayant une seconde taille et une seconde forme ; l'extension de la pré-forme de forme à monter d'article de chaussures SMP (110, 200, 430, 710) à l'intérieur de la première cavité de moulage (320, 420) du premier moule (300, 400) de forme à monter d'article de chaussures afin de produire la première forme à monter d'article de chaussures (150, 810) ; le refroidissement de la première forme à monter d'article de chaussures (150, 810); et le retrait de la première forme à monter d'article de chaussures (150, 810) du premier moule (300, 400) de forme à monter d'article de chaussures.

10. Procédé selon la revendication 9, dans lequel la température seuil (T) est d'au moins 75 °C ; ou
dans lequel la température seuil (T) est entre 50 °C et 80 °C.

11. Procédé selon la revendication 9, dans lequel le chauffage de la pré-forme de forme à monter d'article de chaussures SMP (110, 200, 430, 710) est réalisé après que la pré-forme de forme à monter d'article de chaussures SMP (110, 200, 430, 710) a été placée dans la première cavité de moulage (320, 420) du premier moule (300, 400) de forme à monter d'article de chaussures ou, de manière facultative,
dans lequel le chauffage de la pré-forme de forme à monter d'article de chaussures SMP (110, 200, 430, 710) est réalisé avant que la pré-forme de forme à monter d'article de chaussures SMP (110, 200, 430, 710) soit placée dans la première cavité de moulage (320, 420) du premier moule (300, 400) de forme à monter d'article de chaussures.

12. Procédé selon la revendication 9, dans lequel la première forme à monter d'article de chaussures (150, 810) est refroidie avec un élément parmi un système de refroidissement de fluide ou un système de refroidissement de gaz.

13. Procédé afin d'utiliser une pré-forme de forme à monter d'article de chaussures en polymère à mémoire de forme (SMP) (110, 200, 430, 710) unique dans la production d'articles de chaussures de différentes formes et tailles, le procédé comportant : la fourniture de la pré-forme de forme à monter d'article de chaussures SMP (110, 200, 430, 710) ; le chauffage de la pré-forme de forme à monter d'article de chaussures SMP (110, 200, 430, 710) au-dessus d'une température seuil (T) ; le placement de la pré-forme de forme à monter d'article de chaussures SMP (110, 200, 430, 710) chauffée dans une première cavité de moulage (320, 420) d'un premier moule (300, 400) afin de produire une première forme à monter d'article de chaussures (150, 810) ayant une première taille et une première forme ; l'extension de la pré-forme de forme à monter d'article de chaussures SMP (110, 200, 430, 710) à l'intérieur de la première cavité de moulage (320, 420) du premier moule (300, 400) afin de former la première forme à monter d'article de chaussures (150, 810) ; le refroidissement de la première forme à monter d'article de chaussures (150, 810) ; le retrait de la première forme à monter d'article de chaussures (150, 810) de la première cavité de moulage (320, 420) du premier moule (300, 400) ; et l'utilisation de la première forme à monter d'article de chaussures (150, 810) ayant la première taille et la première forme dans un premier processus de production d'article de chaussures d'une première pluralité d'articles de chaussures.

14. Procédé selon la revendication 13 comportant en outre : le placement de la première forme à monter d'article de chaussures (150, 810) dans une seconde cavité de moulage (320, 420) d'un second moule (300, 400) afin de produire une seconde forme à monter d'article de chaussures (160, 810) ayant une seconde taille et une seconde forme ; le chauffage de la première forme à monter d'article de chaussures (150, 810) au-dessus de la température seuil (T) à l'intérieur de la seconde cavité de moulage (320, 420) du second moule (300, 400) ; l'extension de la première forme à monter d'article de chaussures (150, 810) à l'intérieur de la seconde cavité de moulage (320, 420) du second moule (300, 400) afin de former la seconde forme à monter d'article de chaussures (160, 810) ; le refroidissement de la seconde forme à monter d'article de chaussures (160, 810) ; le retrait de la seconde forme à monter d'article de chaussures (160, 810) de la seconde cavité de moulage (320, 420) du second moule (300, 400) ; et l'utilisation de la seconde forme à monter d'article de chaussures (160, 810) ayant la seconde taille et la seconde forme dans un second processus de production d'article de chaussures d'une seconde pluralité d'articles de chaussures et, de manière facultative,
dans lequel la première taille de la première forme à monter d'article de chaussures (150, 810) est inférieure à la seconde taille de la seconde forme à monter d'article de chaussures (160, 810).

15. Procédé selon la revendication 13, comportant en outre : le chauffage de la première forme à monter d'article de chaussures (150, 810) au-dessus de la température seuil (T), dans lequel, une fois chauffée, la première forme à monter d'article de chaussures (150, 810) retourne à la pré-forme de forme à monter d'article de chaussures SMP (110, 200, 430, 710) ; le chauffage de la pré-forme de forme à monter d'article de chaussures SMP (110, 200, 430, 710) au-dessus de la température seuil (T) ; le placement de la pré-forme de forme à monter d'article de chaussures SMP (110, 200, 430, 710) dans une seconde cavité de moulage (320, 420) d'un second moule (300, 400) afin de produire une seconde forme à monter d'article de chaussures (160, 810) ayant une seconde taille et une seconde forme ; l'extension de la pré-forme de forme à monter d'article de chaussures SMP (110, 200, 430, 710) à l'intérieur de la seconde cavité de moulage (320, 420) du second moule (300, 400) afin de former la seconde forme à monter d'article de chaussures (160, 810) ; le refroidissement de la seconde forme à monter d'article de chaussures (160, 810) ; le retrait de la seconde forme à monter d'article de chaussures (160, 810) de la seconde cavité de moulage (320, 420) du second moule (300, 400) ; et l'utilisation de la seconde forme à monter d'article de chaussures (160, 810) ayant la seconde taille et la seconde forme dans un second processus de production d'article de chaussures d'une seconde pluralité d'articles de chaussures.
